# EUROPÄISCHE PATENTANMELDUNG

(11) **EP 1 672 559 A2**
(43) Veröffentlichungstag der Anmeldung: **21.06.2006**
(21) Anmeldenummer: 05025519.9
(22) Anmeldetag: 23.11.2005
(51) Int. Cl.: G06K 1/12

(54) **Verfahren zur Gewichskennzeichnung eines aus Glas, Porzellan oder einem anderen keramischen Material gefertigten Behältnisses**

(30) Priorität: 14.12.2004 DE 102004060013
(71) Anmelder: Porzellanfabrik Weiden Gebr. Bauscher (BHS), 92637 Weiden (DE)
(72) Erfinder: Kraus, Wilhelm, 92637 Weiden (DE)
(74) Vertreter: Blaumeier, Jörg

(57) **Zusammenfassung**

Verfahren zur Gewichtskennzeichnung eines aus Glas, Porzellan oder einem anderen keramischen Material gefertigten Behältnisses in Form eines Tellers, einer Schale oder dergleichen, insbesondere zur Aufnahme von Nahrungs- und Genussmitteln, bei welchem Verfahren das Behältnis nach seiner Fertigstellung zur Erfassung des Ist-Gewichts gewogen wird, wonach mittels einer Recheneinrichtung ein das Ist-Gewicht codierender Barcode in Form von Barcodedaten ermittelt wird, wonach die Barcodedaten einer Lasereinrichtung gegeben werden, mittels der unter Verwendung eines Farbträgers der farbige Barcode auf das Behältnis gelasert wird.

## Beschreibung

Die Erfindung betrifft ein Verfahren zur Gewichtskennzeichnung eines aus Glas, Porzellan oder einem anderen keramischen Material gefertigten Behältnisses in Form eines Tellers, einer Schale oder dergleichen, insbesondere zur Aufnahme von Nahrungs- und Genussmitteln.

Die Anbringung einer Kennzeichnung des Ist-Gewichts eines fertiggestellten Behältnisses aus Glas, Porzellan oder einem anderen keramischen Material an dem selben ist überall dort vonnöten, wo es darauf ankommt, das Gewicht von auf oder in das Behältnis eingebrachten Gegenständen, insbesondere im Bereich der Nahrungs- und Genussmittel beispielsweise zu Abrechnungszwecken zu bestimmen. In solchen Fällen muss das Gewicht des leeren Behältnisses vom Gesamtgewicht abgezogen werden, um die genaue Menge an aufgebrachten Nahrungs- und Genussmitteln oder anderen Gegenständen erfassen und beispielsweise deren Abgabepreis berechnen zu können. Als Anwendungsbeispiel ist der Einsatz solcher Behältnisse in großen Kantinen zu nennen. Dort kommen häufig automatische Berechnungssysteme für den Speisepreis zum Einsatz, wobei sich der Preis nach dem Gewicht der genommenen Speise berechnet. Üblicherweise ist an in solchen Systemen verwendeten Behältnissen, insbesondere Tellern bodenseitig ein Barcode angebracht, der in der Regel an der Kasse über eine entsprechende Leseeinrichtung erfasst wird, so dass das Ist-Gewicht des Tellers bestimmt wird und von dem an der Kasse ermittelten Gesamtgewicht abgezogen wird. Das Differenzgewicht ist dann Grundlage für die Preisberechnung.

Üblicherweise ist die behältnisseitige Angabe des Ist-Gewichts über den Barcode nur relativ ungenau, was seine Ursache darin hat, dass im Stand der Technik der Barcode in einem Schiebebildverfahren auf das Behältnis aufgedruckt wird. Zu unterschiedlichen Ist-Gewichten ist jeweils ein Schiebebild, das einen Barcode abbildet, als Druckvorlage vorhanden, die entsprechend dem gemessenen Behältnisgewicht aus einem Vorlagenmagazin manuell zu entnehmen ist und anschließend in die Druckmaschine eingesetzt wird. Üblicherweise zeigen aber Behältnisse wie beispielsweise Teller selbst innerhalb einer Charge keine identischen Ist-Gewichte, vielmehr sind mitunter relativ beachtliche Schwankungsbreiten gegeben. Es ist rein wirtschaftlich nicht möglich, jeden Teller separat zu verwiegen und zu jedem Teller das jenige Schiebebild aus dem Magazin zu holen und einzulegen, das vom über den Barcode codierten Gewicht dem real gemessenen Ist-Gewicht am nächsten kommt. Im Übrigen ist üblicherweise nicht für jedes Ist-Gewicht eine genau diesem zugeordnete Barcode-Vorlage vorhanden, vielmehr sind in der Regel nur zu bestimmten Gewichten entsprechende Vorlagen vorhanden, wobei im Rahmen der Behältnisherstellung versucht wird, möglichst nah an ein solches vorgegebenes Vorlagengewicht heranzukommen. Es liegt damit auf der Hand, dass die Gewichtskennzeichnungen der einzelnen Behältnisse in der Regel relativ große Differenzen zum realen Ist-Gewicht des Tellers oder dergleichen aufweisen.

Dies ist in Systemen der eingangs genannten Art, wo solche Behältnisse verwendet werden, beispielsweise im Bereich von Kantinen- oder Restaurationsbetrieben, nachteilig, als aufgrund der ungenauen Behältnisgewichtsangabe die Preisberechnung fehlerhaft erfolgt. Die Preisberechnung erfolgt üblicherweise zu Lasten des Systembetreibers, nachdem in der Regel das über den Barcode codierte Gewicht immer oberhalb des Ist-Gewichts liegt, da im umgekehrten Fall die Gewichtsberechnung und daraus resultierend die Preisberechnung zu Lasten des Kunden ginge, was aber keinesfalls gewünscht ist. Je größer also die sich ergebende Gewichtsdifferenz zwischen Ist-Gewicht und codiertem Barcode-Gewicht, desto größer sind die Nachteile für den Systembetreiber. Diese Differenzen und sich daraus ergebenden Preisnachteile zu Lasten des Systembetreibers summieren sich und werden um so größer, je mehr Behältnisse im System verwendet werden, je stärker also beispielsweise die Kantine frequentiert ist etc.

Der Erfindung liegt damit das Problem zugrunde, ein Verfahren anzugeben, das eine möglichst genaue Ist-Gewichtskennzeichnung eines Behältnisses ermöglicht.

Zur Lösung dieses Problems ist bei einem Verfahren der eingangs genannten Art erfindungsgemäß vorgesehen, dass das Behältnis nach seiner Fertigstellung zur Erfassung des Ist-Gewichts gewogen wird, wonach mittels einer Recheneinrichtung ein das Ist-Gewicht codierender Barcode in Form von Barcodedaten ermittelt wird, wonach die Barcodedaten einer Lasereinrichtung gegeben werden, mittels der unter Verwendung eines Farbträgers der farbige Barcode auf das Behältnis gelasert wird.

Beim erfindungsgemäßen Verfahren erfolgt mit besonderem Vorteil die Ermittlung eines Ist-gewichtsgenauen Barcodes unter Verwendung einer entsprechenden Recheneinrichtung, der das zuvor über eine geeignete Wiegeeinrichtung so exakt wie möglich gemessene Ist-Gewicht gegeben wird. Die Behältnisauswiegung kann beispielsweise auf ein Gramm genau erfolgen. Zu dem grammgenau ermittelten Ist-Gewicht wird nun ein exakter, behältnisspezifischer Barcode über die Recheneinrichtung in Form geeigneter elektronischer Barcodedaten ermittelt. Um nun den so ermittelten, Ist-gewichtsgenauen Barcode aufbringen zu können, werden die Barcodedaten an eine Lasereinrichtung gegeben, in der unter Verwendung eines Farbträgers der Barcode abgebildet wird. Hierzu wird der Farbträger mit dem Laserstrahl, der in Abhängigkeit der Barcodedaten zur Erzeugung des entsprechenden Barcodes entsprechend angesteuert wird, beaufschlagt, so dass die im Farbträger enthaltenen Farbpigmente auf dem Behältnis, beispielsweise dem Tellerboden, appliziert werden können und der farbige, sich deutlich von der Grundfarbe des Behältnisses unterscheidende Barcode erzeugt wird.

Das heißt, beim erfindungsgemäßen Verfahren wird nicht mehr mit umständlichen Schiebebildvorlagen gearbeitet, sondern es erfolgt eine exakte, gewichtsgenaue Barcodeermittlung und Barcodeaufbringung. Der aufgebrachte Barcode gibt folglich exakt das ermittelte Ist-Gewicht wieder. Wird nun ein solches Behältnis in den eingangs beschriebenen Kantinen- oder Restaurationsbetrieben eingesetzt, kann das Gewicht aufgebrachter Gegenstände absolut exakt ermittelt werden, etwaige Gewichts- oder Berechnungs- und Preisdifferenzen zu Lasten eines Beteiligten werden mit besonderem Vorteil vermieden.

Die erfindungsgemäße Verfahrensweise lässt folglich eine hoch genaue Tarierung des Behältnisses zu, wobei die Exaktheit abhängig von der Genauigkeit der Behältnisauswiegung ist. Die Auswiegung sollte wie beschrieben wenigstens auf ein Gramm genau erfolgen, das heißt, etwaige Kommastellen werden entsprechend auf ein volles Gramm gerundet. Selbstverständlich sind auch noch feinere Tarierungsstufen möglich.

In diesem Zusammenhang ist anzuführen, dass exakt tarierte, mit einem Barcode versehene Behältnisse natürlich nicht nur in den beschriebenen Kantinen- oder Restaurationsbetrieben eingesetzt werden können. Vielmehr können sie überall dort Verwendung finden, wo auf ihnen aufgebrachte Gegenstände ausgewogen werden sollen.

Zweckmäßig ist es nicht zuletzt zu Kontrollzwecken seitens des Behältnisherstellers, wenn zusammen mit den Barcodedaten auch Ist-Gewichtsdaten an die Lasereinrichtung gegeben werden, die neben dem Barcode auch das Ist-Gewicht in Zahlenform auflasert. Das heißt, die Lasereinrichtung erhält in elektronischer Form nicht nur die Barcodedaten, sondern auch entsprechende Ist-Gewichtsdaten, über die der Laser, der den Farbträger beaufschlagt, gesteuert wird. Beispielsweise kann das Zahlengewicht unterhalb des Barcodes appliziert werden.

Zur Rationalisierung des Verfahrens ist es zweckmäßig, wenn das Ist-Gewicht mittels einer elektronischen Wiegeeinrichtung erfasst und von dieser in Form von Ist-Gewichtsdaten automatisch an die Recheneinrichtung übergeben wird, die die Daten dann umgehend zur Erzeugung des Barcodes beziehungsweise der Barcodedaten verarbeitet. Von der Recheneinrichtung werden die Barcodedaten vorteilhaft automatisch an die Lasereinrichtung übergeben, die dann umgehend mit dem Aufbringen des Barcodes beginnen kann, sobald das zu kennzeichnende Behältnis, also beispielsweise der Teller, in die Lasereinrichtung überführt wurde.

Besonders zweckmäßig ist es, wenn ein zu wiegendes Behältnis automatisch über eine Transporteinrichtung auf die Wiegeeinrichtung, nach dem Wiegen von dieser zur Lasereinrichtung und/oder von dieser nach dem Kennzeichnen abtransportiert wird. Werden alle Wegstrecken über eine Transporteinrichtung bedient, kann ein vollautomatischer Transportbetrieb realisiert werden. Die Wiegeeinrichtung ist beispielsweise eine bekannte Durchlaufwaage, mittels der ein Behältnis, das über die Transporteinrichtung herangefördert und nach Einlaufen in die Wiegeeinrichtung kurz gebremst wird, ausgewogen wird, wonach das Behältnis zur Lasereinrichtung transportiert und gekennzeichnet wird. Auch hier kann es sich bei der Transporteinrichtung um eine Durchlauftransporteinrichtung handeln, die dann den Abtransport übernimmt. Denkbar ist es aber auch, nur Teilstrecken mit einer Transporteinrichtung zu bedienen, beispielsweise nur den Transport von der Wiegeeinrichtung zur Lasereinrichtung. Das Aufstellen beziehungsweise Abnehmen erfolgt dann manuell.

Als Farbträger wird vorteilhaft ein mit einer bei Einwirken des Laserstrahls auf dem Behältnis applizierbaren Farbschicht belegtes Trägerband verwendet. Ein solches Trägerband, mitunter auch Laserübertragungsfolie zum Lasermarkieren genannt, wird beispielsweise von der Firma tesa AG, DE-Hamburg, hergestellt und unter dem Handelsnamen "tesa 6932" vertrieben. Es zeichnet sich dadurch aus, dass auf einer Trägerfolie eine Farbschicht enthaltend keramische Farbpigmente, Glasfritten und ein Energieabsorbermaterial aufgebracht ist, die über eine Klebeschicht abgedeckt ist. Wird nun der Laserstrahl appliziert, wird die Laserenergie in dem Absorbermaterial absorbiert, es heizt sich auf Temperaturen bis ca. 2000° C auf. Mit der extremen Erwärmung schmelzen die Glasfritten auf, es kommt zu einer Volumenvergrößerung. Aufgrund der Klebeschichtabdeckung bildet sich innerhalb der Farbschicht bedingt durch die Volumenvergrößerung ein relativ höher Druck. Bei Erreichen eines hinreichenden Drucks reißt die Klebeschichtabdeckung auf, die lokal aufgeschmolzene flüssige Glasmasse samt der an ihnen gebundenen Farbpigmente wird explosionsartig auf die nur ca. 0,5 mm beabstandete Behältnisoberfläche gespritzt. Da die Farbschicht und mithin das Absorbermaterial nur lokal dort, wo der Laser einstrahlt, eine Energiezufuhr erfährt, erwärmt sich auch nur dort das Absorbermaterial, nur die unmittelbar in diesem Bereich vorhandenen Glasfritten schmelzen auf. Infolgedessen kann ein sehr exaktes Barcodemuster appliziert werden.

Nachdem die Glasmasse im schmelzflüssigen Zustand vorliegt und zusammen mit den gebundenen Farbsegmenten auf die Behältnisoberfläche aufgebracht wird, kann eine extrem feste, dauerhafte Beschichtung erreicht werden, da die Glassubstanz nach Abkühlen wieder in den glasartigen Zustand übergeht, die Farbpigmente sind in der Glasmatrix fest eingebunden. Eine hohe Spülmaschinenfestigkeit kann hierüber realisiert werden, ohne dass ein weiterer Schritt zur Abdeckung des aufgelaserten Barcodes etc. vorzunehmen wäre.

Des Weiteren ist es zweckmäßig, wenn ein erfasstes Ist-Gewicht zu Zwecken der Nachverfolgung auch archiviert wird, insbesondere durch Ausdrucken oder auf einem Speichermedium. Wird beispielsweise über die elektronische Wiegeeinrichtung das Ist-Gewicht bestimmt, kann es wie beschrieben zum einen in die Recheneinrichtung gegeben werden, zum anderen beispielsweise auch an eine Druckereinrichtung, wo das Ist-Gewicht zusammen mit gegebenenfalls weiteren Informationen zum Behältnis (Herstellungstag, Herstellungscharge etc.) ausgedruckt wird. Auch eine Speicherung auf einem Speichermedium wie Festplatte, CD-ROM oder dergleichen ist denkbar.

Weiterhin kann nach dem Aufbringen des Barcodes und gegebenenfalls des Ist-Gewichts eine Kontrolle hinsichtlich der Erkennbarkeit des Barcodes und gegebenenfalls des Ist-Gewichts erfolgen. Dieses kann rein optisch durch einen Mitarbeiter erfolgen, es ist aber auch denkbar, dies automatisch vorzunehmen, gegebenenfalls über einen integrierten Barcodelaser oder eine entsprechende Zahlenerfassungseinrichtung, der oder die bevorzugt bereits in der Lasereinrichtung integriert sind und unmittelbar nach dem Beenden des Laserbetriebs den Barcode erfassen. Es ist aber auch denkbar, hierfür eine separate Einrichtung vorzusehen, auf die das fertige Behältnis nach dem Laserkennzeichnen vorzugsweise automatisch aufgebracht wird. Mitunter kann es vor der Kontrolle erforderlich sein, Farbrückstände durch Abwischen oder dergleichen zu entfernen.

Neben dem Verfahren betrifft die Erfindung ferner eine Vorrichtung zur Gewichtskennzeichnung eines aus Glas, Porzellan oder einem anderen keramischen Material gefertigten Behältnisses in Form eines Tellers, einer Schale oder dergleichen, insbesondere zur Aufnahme von Nahrungs- und Genussmitteln, umfassend eine Recheneinrichtung, ausgebildet zum Ermitteln eines das erfasste Ist-Gewicht des fertiggestellten Behältnisses codierenden Barcodes in Form von Barcodedaten, sowie eine Lasereinrichtung zum Erzeugen des farbigen Barcodes unter Verwendung eines Farbträgers anhand der ihr gegebenen Barcodedaten.

Weiterhin kann mittels der Lasereinrichtung neben dem Barcode auch das Ist-Gewicht in Zahlenform unter Verwendung von der Lasereinrichtung gegebenen Ist-Gewichtsdaten aufbrinbar sein.

Zweckmäßigerweise ist eine elektronische Wiegeeinrichtung vorgesehen, die mit der Recheneinrichtung zur Übertragung von Ist-Gewichtsdaten zur Barcodeermittlung kommuniziert, wobei bevorzugt auch die Recheneinrichtung direkt mit der Lasereinrichtung zur Übertragung der Barcodedaten und gegebenenfalls der Ist-Gewichtsdaten kommuniziert. Hierüber kann ein schneller Datentransfer realisiert werden, so dass insgesamt ein relativ hoher Wiege- und Kennzeichnungsdurchsatz erreicht werden kann.

Zweckmäßigerweise ist eine Transporteinrichtung vorgesehen, mittels der ein Behältnis automatisch von der Wiegeeinrichtung zur Lasereinrichtung förderbar ist, wobei die Fördereinrichtung des Weiteren auch zum Fördern eines Behältnisses zur Wiegeeinrichtung und/oder zum Abtransportieren eines Behältnisses von der Lasereinrichtung vorgesehen sein kann. Der Transporteinrichtung kann dabei am Eingang und/oder am Ausgang ein Magazin zugeordnet sein, aus dem zu kennzeichnende Behältnisse entnehmbar oder in das gekennzeichnete Behältnisse einbrinbar sind. Ein solches Magazin kann beispielsweise ein Stapelmagazin sein, in dem die Behältnisse automatisch in eine Übergabeposition gefahren werden können, wo sie auf die Transporteinrichtung über einen geeigneten Übernahmemechanismus gebracht werden, wie umgekehrt am Ausgang ein entsprechendes Magazin mit einem Übergabemechanismus zum Einbringen in entsprechende, beispielsweise vertikal förderbare Behältnisaufnahmen vorgesehen sein kann.

Die Lasereinrichtung arbeitet bevorzugt mit einem Farbträger in Form eines mit einer Farbschicht belegten Trägerbandes, welche Farbschicht bei Einwirken des Laserstrahls in der oben beschriebenen Weise auf dem Behältnis applizierbar ist.

Zu Archivierungszwecken ist des Weiteren der Wiegeeinrichtung oder der Recheneinrichtung eine Druckeinrichtung oder eine Speichereinrichtung zum Erzeugen eines das Ist-Gewicht wiedergebenden Ausdrucks oder zum Speichern des Ist-Gewichts auf einem Speichermedium zugeordnet.

Weitere Vorteile, Merkmale und Einzelheiten der Erfindung ergeben sich aus dem im Folgenden beschriebenen Ausführungsbeispiel sowie anhand der Zeichnungen. Dabei zeigen:
- Fig. 1: eine Prinzipskizze einer erfindungsgemäßen Vorrichtung, und
- Fig. 2: ein mit dem erfindungsgemäßen Verfahren beziehungsweise der erfindungsgemäßen Vorrichtung gekennzeichnetes Behältnis in Form eines Tellers, auf dessen Unterseite ein Barcode und ein Zahlengewicht aufgebracht ist.

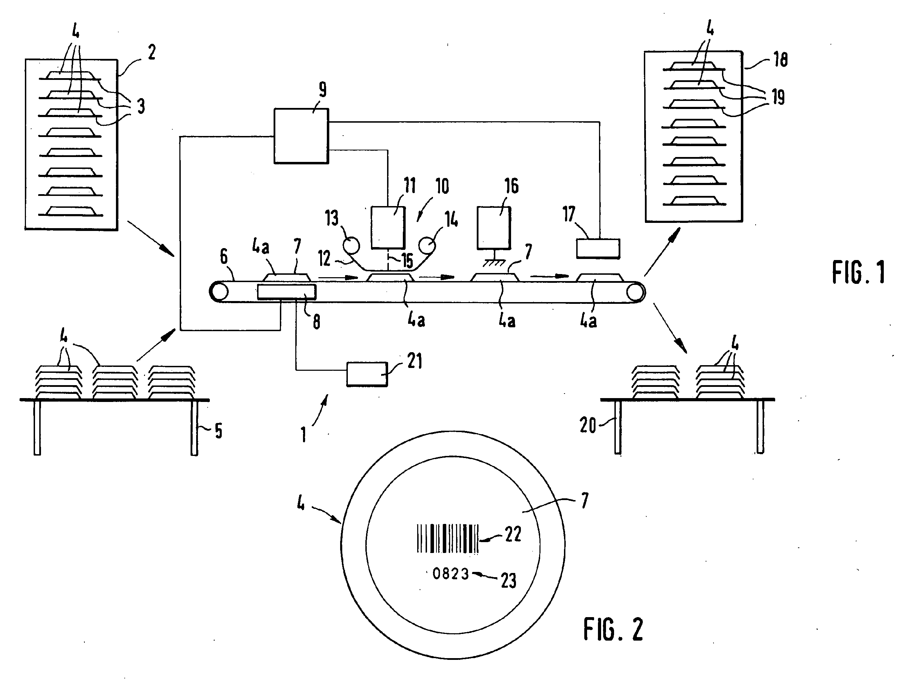

Fig. 1 zeigt eine erfindungsgemäße Vorrichtung 1, umfassend ein Magazin 2, in dem eine Vielzahl einzelner Aufnahmen 3 vorgesehen sind, auf denen jeweils ein mit Ist-Gewicht zu kennzeichnendes Behältnis 4, hier in Form von Tellern, aufgebracht ist. Die Aufnahmen 3 können beispielsweise vertikal verfahrbar sein, so dass über einen entsprechenden Übergabe- oder Entnahmemechanismus jeweils ein zu kennzeichnendes Behältnis 4 entnommen und auf eine nachfolgend noch beschriebene Transporteinrichtung übergeben werden kann. Im Prinzip ist es auch denkbar, die Transporteinrichtung entsprechend höhenmäßig zu verstellen.

Als Alternative zum automatischen Magazinentnahmebetrieb ist ferner ein manueller Betrieb denkbar, wobei hier auf einem Tisch oder Gestell 5 entsprechende Behältnisse 4 aufgestapelt sind, die von einer Person manuell auf die Transporteinrichtung gegeben werden.

Die Transporteinrichtung 6 selbst ist in Form eines motorisch angetriebenen Förderbandes dargestellt, es sind aber auch andere Transporteinrichtungen in Form von angetriebenen Rollenförderern etc. denkbar. Sie müssen jedoch so ausgeführt sein, dass eine Beschädigung der Behältnisse 4 vermieden wird.

Im gezeigten Beispiel wurde ein Behältnis 4a bereits auf die Transporteinrichtung gebracht, sei es aus dem Magazin 2 oder durch Entnahme vom Gestell 5. Ersichtlich ist das Behältnis 4a umgekehrt auf die Transporteinrichtung 6 gelegt, so dass sein Boden 7 nach oben frei liegt. Die Transporteinrichtung 6, die in Richtung des Pfeils fördert, transportiert das Behältnis 4a zunächst zu einer elektronischen Wiegeeinrichtung 8, bei der es sich um eine Durchlaufwiegestation handelt. Das Transportband 6 stoppt kurz mit Einlauf des Behältnisses 4a in der Wiegeeinrichtung 8, was beispielsweise über geeignete Sensoren erfasst werden kann. In der Wiegeeinrichtung 8 wird nun beispielsweise auf ein gerundetes Gramm genau das Ist-Gewicht des Behältnisses 4a bestimmt. Die Ist-Gewichtsdaten werden einer Recheneinrichtung 9 gegeben, die mit der elektronischen Wiegeeinrichtung 8 kommuniziert.

In der Recheneinrichtung 9 wird nun das Ist-Gewicht des Behältnisses 4a verarbeitet und darauf basierend ein gewichtsspezifischer und damit behältnisspezifischer Barcode, der das Ist-Gewicht codiert, errechnet. Die Recheneinrichtung 9 kommuniziert mit einer Lasereinrichtung 10, umfassend eine Lasereinheit 11 sowie einen bandförmigen Farbträger 12 in Form einer Laserübertragungsfolie. Dieser bandförmige Farbträger 12 ist über eine geeignete Fördereinrichtung, hier Abspul- und Aufwickelrollen 13, 14 bezüglich der Lasereinheit 11 bewegbar. Wird nun ein Behältnis, hier das vorab gewogene Behältnis 4a, weiter gefördert und unter die Lasereinrichtung 10 gebracht, so wird zunächst ein neues, unverbrauchtes Stück des Farbträgers 12 bezüglich der Tellerunterseite positioniert und in einen definierten Abstand zur Tellerunterseite fixiert, was beispielsweise über geeignete Niederhalter oder Abstandshalter oder dergleichen erfolgen kann, die hier nicht näher dargestellt sind. Der Abstand beträgt beispielsweise 0,5 mm. Anhand der von der Recheneinrichtung 9 ermittelten und an die Lasereinrichtung 10 beziehungsweise die Lasereinheit 11 übertragenen Barcodedaten wird nun die Lasereinheit 11 so betrieben, dass der Laserstrahl 15 gemäß der abzubildenden Barcodeform auf den Farbträger gestrahlt wird. Der Farbträger besteht aus einer Trägerfolie, auf die eine Farbschicht enthaltend keramische Farbpigmente, Glasfritten sowie ein Energieabsorbermaterial aufgebracht ist, die ihrerseits mit einer Klebeschicht bedeckt ist. Die lokal eingetragene Laserenergie wird von dem Absorbermaterial absorbiert, dieses erwärmt sich auf Temperaturen bis zu 2000° C. Hierdurch bedingt schmelzen die Glasfritten auf, die flüssige Glasmasse vergrößert hierbei ihr Volumen. Durch die Abdeckung mit der Kleberschicht stellt sich zwischen Kleberschicht und Trägerfolie bedingt durch die Volumenvergrößerung eine Druckerhöhung ein. Bei hinreichendem Druck reißt die Klebeschicht auf, das lokal vorliegende schmelzflüssige Glasmaterial zusammen mit den in ihm gebundenen Farbpigmenten wird explosionsartig auf die Bodenfläche 7 des Behältnisses 4a gespritzt. Die Lasereinheit 11 bestrahlt nun den bandförmigen Farbträger 12 in Abhängigkeit der gegebenen Barcodedaten, das heißt der Laserstrahl 15 wandert entsprechend der ihn steuernden Barcodedaten über den feststehenden Farbträger, so dass der Barcode entsprechend appliziert wird. Die aufgespritzte, im Auftreffzeitpunkt noch flüssige Glasmasse mit den eingebundenen Farbpigmenten erstarrt auf dem Behältnisboden 7, so dass sich ein extrem fester, auch hohen Beanspruchungen standhaltender Farbauftrag ergibt.

Neben den Barcodedaten überträgt die Recheneinrichtung 9 auch die seitens der Wiegeeinrichtung 4 ermittelten Ist-Gewichtsdaten an die Lasereinrichtung 10, die diese Ist-Gewichtsdaten in Zahlenform zusätzlich zum Barcode auf die Bodenseite 7 des Behältnisses 4a in der oben beschriebenen Weise abbildet.

Nach der Aufbringung des Barcodes und gegebenenfalls des Zahlengewichts, das sich in seiner Farbe je nach den verwendeten Farbpigmenten ausprägt, vornehmlich aber schwarz ist, wird das gelaserte Behältnis 4a über die Transporteinrichtung 6 zu einer Reinigungseinrichtung 16 weitertransportiert, bei der beispielsweise in einem automatischen Betrieb eine Reinigung des Behältnisbodens 7 erfolgt, beispielsweise durch Abwischen oder dergleichen. Hierüber werden Farbreste, die nicht in die Glasmatrix der Glasmasse am Behältnisboden 7 eingebunden sind, entfernt werden können. Die Reinigungseinrichtung 16 ist optional und kann gegebenenfalls entfallen oder durch eine manuelle Reinigung bei nachfolgender optischer Sichtkontrolle ersetzt werden.

Anschließend erfolgt ein Weitertransport des Behältnisses 4a zu einer Kontrolleinrichtung 17, beispielsweise einem Barcodeleser oder dergleichen, in der der aufgebrachte Barcode hinsichtlich seiner Lesbarkeit überprüft wird. Ferner ist die Kontrolleinrichtung 17 beispielsweise zum Lesen der aufgebrachten Zahlen ausgebildet, so dass auch diese überprüft werden können. Die Kontrolleinrichtung 17 kommuniziert mit der Recheneinrichtung 9, so dass ein Abgleich der codierten Barcodedaten beziehungsweise des Zahlengewichts mit den jeweils seitens der Recheneinrichtung 9 errechneten Barcodedaten beziehungsweise den Ist-Gewichtsdaten erfolgen kann. Ergibt sich, dass der Barcode oder die Zahlen nicht lesbar sind, oder sind diese falsch, kann eine Fehlermeldung an der Recheneinrichtung 9 oder der Kontrolleinrichtung 17 ausgegeben werden. Die Kontrolle kann aber auch nur optisch durch eine Person erfolgen.

Anschließend wird das Behältnis 4a beispielsweise automatisiert in ein weiteres Magazin 18 überführt, wo ebenfalls entsprechende Aufnahmen 19 für jeweils ein Behältnis 4 vorgesehen sind. Dieses Magazin kann entsprechend dem Magazin 2 ausgebildet sein. Alternativ kann auch hier eine manuelle Abnahme eines Behältnisses von der Transporteinrichtung 6 und Übergabe auf ein Gestell 20 erfolgen.

Wie Fig. 1 ferner zeigt, kommuniziert die elektronische Wiegeeinrichtung 8 mit einem Drucker 21 oder einem sonstigen Speichermedium, das zum Archivieren der Ist-Gewichtsdaten zu Kontrollzwecken dient. Diese können beispielsweise zusammen mit Zusatzangaben hinsichtlich der Chargennummer, des Herstellungsdatum etc. zusammen ausgedruckt oder abgespeichert werden.

Fig. 2 zeigt schließlich ein erfindungsgemäß gekennzeichnetes Behältnis 4 in Form eines Tellers. Auf dem Tellerboden 7 ist im gezeigten Beispiel zum einen ein Barcode 22 über die Lasereinrichtung 10 aufgebracht worden, daneben aber auch das Ist-Gewicht in Form des Zahlengewichts 23, hier "0823", gleichbedeutend mit einem Gewicht des Behältnisses 4 von 823 Gramm. Dieses Ist-Gewicht ist auf ein gerundetes Gramm genau bestimmt worden.

Abschließend ist darauf hinzuweisen, dass die Kennzeichnung nicht nur auf die in den Figuren beschriebenen Behältnisse in Tellerform beschränkt ist. Es ist selbstverständlich auch möglich, andere Porzellan- oder Keramikgegenstände wie Untertassen, Tassen, Schüsseln, Schalen etc. zu kennzeichnen, auch entsprechende Glasgegenstände können selbstverständlich hierüber gekennzeichnet werden.

## Patentansprüche

1. Verfahren zur Gewichtskennzeichnung eines aus Glas, Porzellan oder einem anderen keramischen Material gefertigten Behältnisses in Form eines Tellers, einer Schale o.dgl., insbesondere zur Aufnahme von Nahrungs-und Genussmitteln, bei welchem Verfahren das Behältnis nach seiner Fertigstellung zur Erfassung des Ist-Gewichts gewogen wird, wonach mittels einer Recheneinrichtung ein das Ist-Gewicht codierender Barcode in Form von Barcodedaten ermittelt wird, wonach die Barcodedaten einer Lasereinrichtung gegeben werden, mittels der unter Verwendung eines Farbträgers der farbige Barcode auf das Behältnis gelasert wird.

2. Verfahren nach Anspruch 1, **dadurch gekennzeichnet, dass** zusammen mit den Barcodedaten auch Ist-Gewichtsdaten an die Lasereinrichtung gegeben werden, die neben dem Barcode auch das Ist-Gewicht in Zahlenform auflasert.

3. Verfahren nach Anspruch 1, **dadurch gekennzeichnet, dass** das Ist-Gewicht mittels einer elektronischen Wiegeeinrichtung erfasst und von dieser in Form von Ist-Gewichtsdaten automatisch an die Recheneinrichtung übergeben wird.

4. Verfahren nach einem der Ansprüche 1 bis 3, **dadurch gekennzeichnet, dass** die Barcodedaten von der Recheneinrichtung automatisch an die Lasereinrichtung übergeben werden.

5. Verfahren nach einem der vorangehenden Ansprüche, **dadurch gekennzeichnet, dass** ein zu wiegendes Behältnis automatisch über eine Transporteinrichtung auf die Wiegeeinrichtung, nach dem Wiegen von dieser zur Lasereinrichtung und/oder von dieser nach dem Kennzeichnen abtransportiert wird.

6. Verfahren nach einem der vorangehenden Ansprüche, **dadurch gekennzeichnet, dass** als Farbträger ein mit einer bei Einwirken des Laserstrahls auf dem Behältnis applizierbaren Farbschicht belegtes Trägerband verwendet wird.

7. Verfahren nach einem der vorangehenden Ansprüche, **dadurch gekennzeichnet, dass** ein erfasstes Ist-Gewicht archiviert wird, insbesondere durch Ausdrucken oder auf einem Speichermedium.

8. Verfahren nach einem der vorangehenden Ansprüche, **dadurch gekennzeichnet, dass** nach dem Aufbringen des Barcodes und gegebenenfalls des Ist-Gewichts eine Kontrolle hinsichtlich der Erkennbarkeit des Barcodes und gegebenenfalls des Ist-Gewichts erfolgt.

9. Vorrichtung zur Gewichtskennzeichnung eines aus Glas, Porzellan oder einem anderen keramischen Material gefertigten Behältnisses in Form eines Tellers, einer Schale o.dgl., insbesondere zur Aufnahme von Nahrungs-und Genussmitteln, umfassend eine Recheneinrichtung (9), ausgebildet zum Ermitteln eines das erfasste Ist-Gewicht des fertiggestellten Behältnisses codierenden Barcodes (22) in Form von Barcodedaten, sowie eine Lasereinrichtung (10) zum Erzeugen des farbigen Barcodes (22) unter Verwendung eines Farbträgers (12) anhand der ihr gegebenen Barcodedaten.

10. Vorrichtung nach Anspruch 9, **dadurch gekennzeichnet, dass** mittels der Lasereinrichtung (10) neben dem Barcode (22) auch das Ist-Gewicht in Zahlenform (23) unter Verwendung von der Lasereinrichtung (10) gegebenen Ist-Gewichtsdaten aufbringbar sind.

11. Vorrichtung nach Anspruch 9 oder 10, **dadurch gekennzeichnet, dass** eine elektronische Wiegeeinrichtung (8) vorgesehen ist, die mit der Recheneinrichtung (9) zur Übertragung von Ist-Gewichtsdaten zur Barcodeermittlung kommuniziert.

12. Vorrichtung nach einem der Ansprüche 9 bis 11, **dadurch gekennzeichnet, dass** die Recheneinrichtung (9) direkt mit der Lasereinrichtung (10) zur Übertragung der Barcodedaten und gegebenenfalls der Ist-Gewichtsdaten kommuniziert.

13. Vorrichtung nach einem der Ansprüche 9 bis 12, **dadurch gekennzeichnet, dass** eine Transporteinrichtung (6) vorgesehen ist, mittels der ein Behältnis automatisch von der Wiegeeinrichtung (8) zur Lasereinrichtung (10) förderbar ist.

14. Vorrichtung nach Anspruch 13, **dadurch gekennzeichnet, dass** die Fördereinrichtung (6) zum Fördern eines Behältnisses (4, 4a) zur Wiegeeinrichtung (8) und/oder zum Abtransportieren eines Behältnisses (4, 4a) von der Lasereinrichtung (10) vorgesehen ist.

15. Vorrichtung nach Anspruch 14, **dadurch gekennzeichnet, dass** der Transporteinrichtung (6) am Eingang und/oder am Ausgang ein Magazin (2, 18) zugeordnet ist, aus dem zu kennzeichnende Behältnisses (4, 4a) entnehmbar oder in das **gekennzeichnet**e Behältnisse (4, 4a) einbringbar sind.

16. Vorrichtung nach einem der Ansprüche 9 bis 15, **dadurch gekennzeichnet, dass** der Farbträger (12) ein mit einer bei Einwirken des Laserstrahls (15) auf dem Behältnis (4, 4a) applizierbaren Farbschicht belegtes Trägerband ist.

17. Vorrichtung nach einem der Ansprüche 9 bis 16, **dadurch gekennzeichnet, dass** der Wiegeeinrichtung (8) oder der Recheneinrichtung (9) eine Druckeinrichtung (21) oder eine Speichereinrichtung zum Erzeugen eines das Ist-Gewicht wiedergebenden Ausdrucks oder zum Speichern des Ist-Gewichts auf einem Speichermedium zugeordnet ist.
